# EUROPEAN PATENT SPECIFICATION

(11) **EP 1 783 012 B1**
(45) Date of publication and mention of the grant of the patent: **22.07.2009**
(21) Application number: 06123120.5
(22) Date of filing: 27.10.2006
(51) Int. Cl.: B60R 22/03, B60R 22/12

(54) **A Restraint System for a Vehicle**
Rückhaltesystem für ein Fahrzeug
Système de retenue pour véhicule

(30) Priority: 03.11.2005 US 163906
(43) Date of publication of application: 09.05.2007
(73) Proprietor: Ford Global Technologies, LLC, Dearborn, MI 48126 (US)
(72) Inventor: Gyllenspetz, Per, SE-416 52 Göteborg (SE); Lundell, Bjorn, SE-41301 Göteborg (SE); Krans, Pär-Erik, SE-041757 Göteborg (SE)
(74) Representative: Messulam, Alec Moses

(56) References cited:
- DE-A1- 3 702 976
- FR-A- 2 465 615
- US-B1- 6 550 805

## Description

The present invention relates generally to occupant restraint systems used in motor vehicles and in particular to a restraint system incorporating a presenter making it easier for an occupant to grasp and secure the belt. A restraint system according to the preamble of claim 1 is shown in US 6,550,805.

Occupant restraint belt systems (also known as safety or seat belts) are fitted to most types of passenger vehicles in order to protect vehicle occupants from injury during a crash or other abrupt deceleration of the vehicle. One limitation to the effectiveness of modern seat belts is that they require a voluntary and optional act by the occupant to fasten the belt properly around their body. Some persons do not use their vehicle's seat belts because they find it difficult or inconvenient to don the seat belt.

This difficulty in donning the belt is sometimes due to the fact that when the belt is in the unfastened condition, it must assume a stowed position in which it does not obstruct the occupant while entering or exiting the vehicle. Consequently, the seat belt is typically configured so that it is pulled to the rear by a retractor mechanism. With the belt in this stowed position, portions of the belt that the occupant must grasp in order to don the belt may be difficult to see and/or reach when in the seated position.

Systems have been proposed for moving a seat belt inwardly and/or forwardly to a more easily grasped position after the occupant is seated in the seat. Examples of such systems are disclosed in U.S. Patent Nos. 6,550,805 and 6,676,162, FR-A-2 465 615 and DE 37 02 976 also disclose similar systems which rely on the weight of a occupant compressing a bladder to provide a source of air pressure for inflating the seat belts and urging them into easily graspable positions, but the comfort of the above systems can be improved upon.

It is an object of this invention to provide a restraint system for a vehicle seating area which includes a belt presentation and securing system which assists the user in securing the belt while seated in the vehicle seat.

According to a first aspect of the invention there is provided a restraint system for use in a passenger seating area of a motor vehicle, **characterised in that** the restraint system comprises a seat belt assembly disposed adjacent a passenger seat adjustable between a stowed position and at least one deployed position, the seat belt assembly including a webbing positionable across the body of an occupant, an inflatable section disposed within the webbing having a deflated condition and an inflated condition wherein the belt assembly is urged to the at least one deployed position, an anchor disposed opposite the seat belt assembly adjacent the seating area having a receiving element adapted to engage and secure the belt assembly and a controller operative to monitor vehicle conditions, the inflatable section being inflated to position the belt assembly in the at least one deployed position for securing around the occupant when the controller detects that the seat is occupied, **characterised in that** the controller is operative to deflate the inflatable section in response to a belt retractor sensor detecting the occupant grasping the belt assembly .

The webbing of the seat belt assembly may extend between a lower anchor mounted adjacent a lower side portion of the seat and an upper anchor including a belt retractor disposed adjacent an upper portion of the seat.

The inflatable section may have, in the deflated condition, a generally flat cross-section and may have, in the inflated condition, an expanded cross-section so that it is more rigid than when it is in the deflated condition, the arrangement being such that, when the inflatable section is inflated, the inflatable section may urge the unfastened belt to at least one deployed position in which the belt is positioned so that an occupant of the seat may easily grasp the belt to permit fastening of the belt.

The inflatable section in the inflated condition may have a cross-section that is smaller than that of the surrounding webbing and is at least partially curved in shape as it extends generally longitudinally through the webbing.

When in the inflated condition, the inflatable section may urge the belt generally inward and forward with respect to the seat.

The system may further comprise a source of gas pressure connected to the inflatable section and may be operable to alternatively inflate and deflate the inflatable section.

The system may further comprise one or more sensors in communication with the controller operative to monitor one or more vehicle conditions.

The one or more sensors may include at least one sensor disposed adjacent the belt retractor to monitor movement of the belt retractor, at least one sensor is disposed adjacent a seat bottom of the vehicle seat to detect the presence of the occupant in the vehicle seat and at least one sensor provided adjacent the receiving element for sensing if the webbing is disposed adjacent the receiving element.

The one or more sensors may include a sensor provided adjacent the receiving element for sensing if the webbing is disposed adjacent the receiving element and the inflatable section may be placed in the deflated condition upon detection of the webbing of belt assembly adjacent the receiving element.

According to a second aspect of the invention there is provided a method of presenting a restraint system associated with a passenger seating area of a motor vehicle to an occupant, **characterised in that** the method comprises the steps of providing a seat belt assembly disposed adjacent a passenger seat including a webbing positionable across the body of an occupant extending between a lower anchor mounted adjacent a lower side portion of the seat and a belt retractor disposed adjacent an upper side portion of the seat, providing an inflatable section disposed within the webbing adjustable between a deflated condition and an inflated condition, wherein the belt assembly is urged to the at least one deployed position, connecting a source of gas pressure to the inflatable section, the source of gas pressure operable to selectively inflate and deflate the inflatable section, providing an anchor disposed opposite the seat belt assembly adjacent the seat having a receiving element adapted to engage and secure the belt assembly and transmitting a signal from a controller to the source of gas pressure to inflate the inflatable section upon detection of an indication from at least one vehicle system, characterised by the step of transmitting a signal from a controller to the source of gas pressure to deflate the inflatable section in response to a an indication from a belt retractor sensor detecting the occupant grasping the belt assembly .

The method may further comprise the step of providing one or more sensors for detecting indications from the at least one vehicle systems.

The method may further comprise the step of providing a sensor provided adjacent the receiving element for sensing if the webbing is disposed adjacent the receiving element.

The restraint system may, in accordance to one embodiment, comprise a seat belt assembly disposed adjacent the passenger seating area adjustable between a stowed position and at least one deployed position, the seat belt assembly including a webbing positionable across the body of an occupant extending between a lower anchor mounted adjacent a lower side portion of the seat and a belt retractor disposed adjacent an upper side portion of the seat, an inflatable section disposed within the webbing having a deflated condition and an inflated condition wherein the belt assembly is urged to the at least one deployed position, a source of gas pressure connected with the inflatable section and operable to alternatively inflate and deflate the inflatable section, one or more sensors operative to monitor one or more vehicle conditions, an anchor disposed opposite the seat belt assembly adjacent the seating area having a receiving element adapted to engage and secure the belt assembly and a controller operative to monitor the one or more sensors, the controller being operable to instruct the source of gas pressure to inflate the inflatable section to position the belt in the at least one deployed position for securing around an occupant in a vehicle when the controller receives a signal from the one or more sensors.

The invention will now be described by way of example with reference to the accompanying drawing of which:-
FIGURE 1 is a side view of a restraint system for use in a passenger seating area of a motor vehicle in accordance with the present invention;
FIGURE 2 is a perspective view of the restraint system in combination with a vehicle seat of the present invention;
FIGURE 3 is a front plan view of the vehicle seating area with the restraint system in a stowed position;
FIGURE 4 is a perspective view of the vehicle seating area with the restraint system in an activated or deployed position;
FIGURE 5 is a perspective view of the vehicle seating area with the restraint system in a secured position;
FIGURE 6 is a schematic view of the restraint system in accordance with the present invention;

FIGURE 7 is a cross-sectional view of the belt assembly with the inflatable section in a deflated condition;
FIGURE 8 is a cross-sectional view of the belt assembly with the inflatable section in an inflated condition;
FIGURE 9 is a cross-sectional view of a belt assembly of a restraint system having an inflatable section in accordance with a second aspect of the present invention; and
FIGURE 10 is a cross-sectional view of a belt assembly of a restraint system having an inflatable section in accordance with a third aspect of the present invention.

Referring now to the Figures, a restraint system incorporating a belt presenter in accordance with the present invention is shown installed in a vehicle having a seating area. It is understood that the restraint system may be used in either the front or rear passenger seating areas. For purposes of this disclosure, the restraint system will be installed in the front passenger seating area.

Restraint system 10 includes an associated seat belt assembly 12 incorporated in or disposed adjacent to a vehicle seat 14 or seating area. Vehicle seat 14 is of the type well known in the art. Seat 14 includes a generally upright seat back 16 for supporting the torso of a seated occupant 18 (indicated in phantom lines) and a generally horizontal seat bottom or cushion 20 projecting generally upward and forward from the bottom portion of the seat back 16 for supporting the pelvis and thighs of the occupant 18.

For purposes of description only, the vehicle seat 14 will be referred to herein as having an inboard side and an outboard side, these terms referring to the sides of the seat adjacent to a centre of a vehicle and an exterior side of a vehicle respectively, as is the case if the seat is located on the left side of the vehicle. This disclosure applies equally to a seat located at any position within a vehicle.

The belt assembly 12 comprises a length of flexible webbing 22 having an upper end secured to an upper anchor 24 adjacent the upper outboard portion 26 of the seat back 16, and a lower end secured to a lower anchor 28 adjacent the rear portion of the seat bottom 20. Webbing 22 serves as a main restraint member and includes an inflatable section (not shown) which will be described in greater detail below.

When the webbing 22 is inserted over and secured to a buckle or receiving element 30 extending from an anchor 32, the webbing 22 defines a lap belt and a shoulder belt in a manner well known in the art to restrain the occupant 18 in the event of a crash or other abrupt deceleration of the vehicle. For purposes of description, anchor 32 is shown inboard of the vehicle seat. However, it is understood that the anchor may be positioned inboard or outboard in the three, four or five point belt assemblies.

As an alternative, the lap belt and shoulder belt may be formed as separate lengths of webbing connected by a fitting (not shown) that includes a receiving element engageable with the inboard anchor. It is also contemplated that belt restraint system 10 may be used with a three point, a four point or a five point belt assembly.

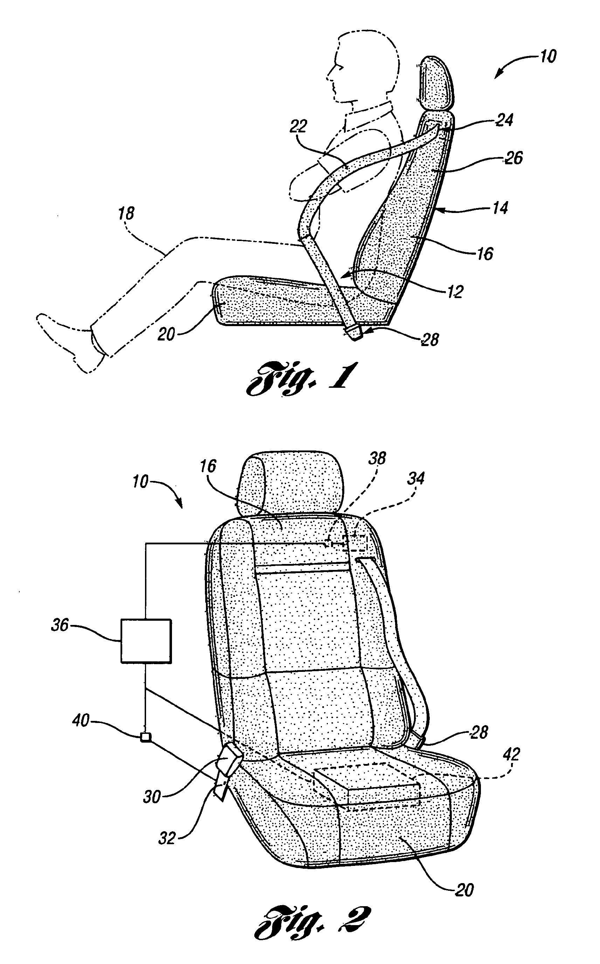

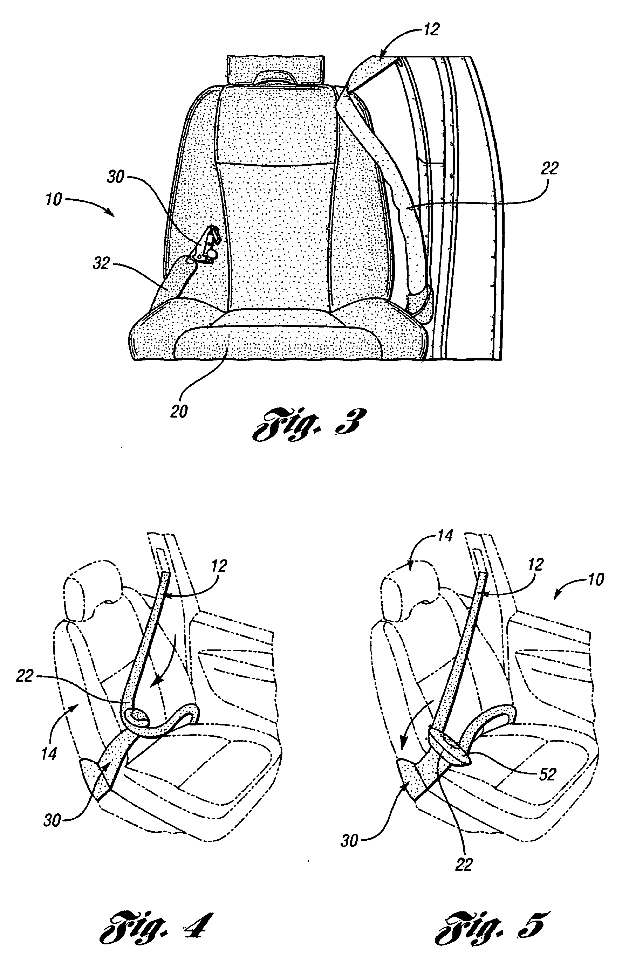

The upper anchor 24 preferably comprises a belt retractor 34 that may be housed within seat back 16 (as shown in Figures 1 and 2), or mounted to a portion of the vehicle structure such as a roof rail or B-pillar as is shown in Figures 3-5 and as is well known in the restraints art. The belt retractor 34, operative to retract the webbing 22 when it is not fastened about the occupant 18, provides for adjustment of the length of the belt for varying-sized seat occupants, and properly positions the seat belt restraint system as is well known in the art.

The belt retractor 34 may include load limiter and/or belt pre-tensioner devices (not shown) of the type well known in the restraints art. In one aspect of the present invention, belt retractor 34 includes an electric motor which assists in the deployment of belt assembly 12. The belt retractor 34 tensions the belt when a spring force is exceeded in response to detection of a possible accident condition, such as vehicle deceleration, which causes the belt to spool out from the retractor. The electric motor, in response to a signal from the controller, automatically spools out webbing as the belt is inflated to overcome the spring force designed into retractor 34 to allow the belt to be presented to a deployed position. The motor may also assist the retractor when retracting the webbing on to the spool.

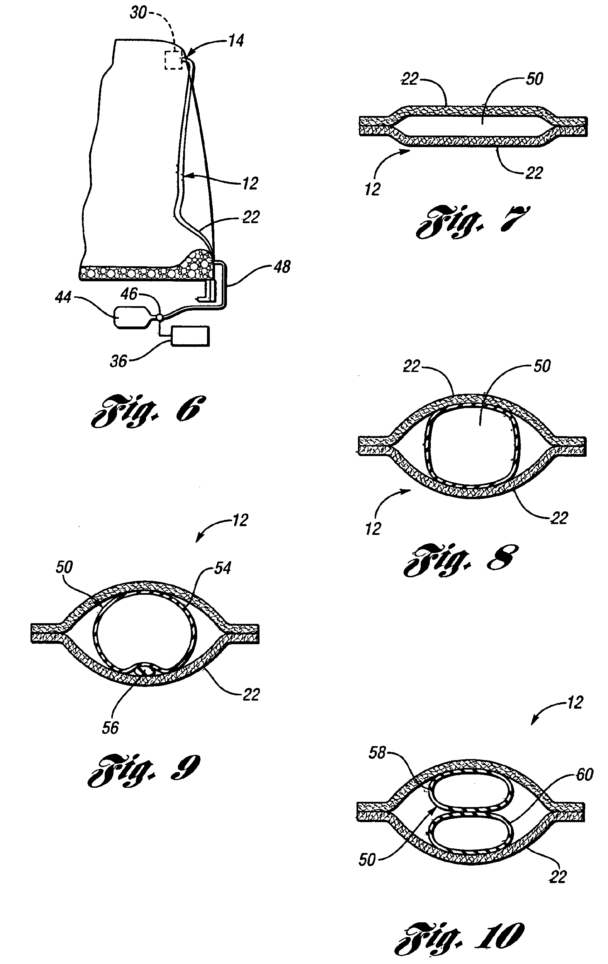

Referring now to Figures 2 and 6, the restraint system 10 includes a controller 36 that monitors the condition of the seat belt assembly 12. One or more sensors 38, 40, 42 are disposed adjacent various portions of the passenger seating area or vehicle seat, including the belt retractor 34 and receiving element 30. Sensors 38, 40, 42 are configured to monitor the condition of the belt assembly 12 and receiving element 30, as well as the occupancy of the vehicle seat 14.

In a preferred aspect of the present invention, sensor 38 monitors the state of belt retractor 34 to determine whether webbing 22 is drawn from a spooled condition in retractor 34 to a use position. Sensor 38 may detect the condition of belt retractor using a variety of sensing methods. For example, a sensor may be incorporated into the belt retractor to detect rotational movement of the retractor. Alternatively, a photocell may be disposed adjacent the belt retractor to sense when the webbing is spooled out from the retractor. In another embodiment, a microswitch senses a change in the diameter of the spooled belt, such that a decrease in diameter indicates a change in condition.

Sensor 40 is provided adjacent the receiving element 30 to detect the presence of the webbing 22 placed around the receiving element 30 for securing the webbing 22. It is understood that the controller 36 may monitor conditions of the seat 14 through the use of sensor 42 coupled to other vehicle systems, such as a seat weight sensor, a door status indicator switch, a buckle status switch, combined with or integrated into a pressure bladder and an ignition switch. For example, the controller may transmit a signal to inflate the inflating portion of the seat belt in response to a "seat occupied" indication from seat weight sensor, and/or a "door closed" indication from door condition sensor, and/or in response to an "on" indication from ignition key.

Referring now to Figures 3-8, a description of the belt presentation features of the restraint system of the present invention is described in greater detail. As is illustrated in Figure 3, prior to an occupant being seated in seat 14, the belt assembly is placed in a stowed position or first position, in which the belt is unfastened and belt retractor (not shown) draws webbing 22 upward so that it extends in a substantially straight line between the upper and lower anchors.

In this position, as shown in Figures 3 and 7, an inflatable section 50 of the belt assembly is in a deflated condition such that the belt is in the stowed position wherein the belt is unfastened and offers little or no interference with the seat occupant entering or exiting the vehicle. In the deflated condition, the inflatable section 50 in webbing 22 does not significantly affect the flexibility of the belt assembly 12.

Receiving element 30 connected to the anchor 32 is disposed adjacent the seat bottom 20. The receiving element 30 is configured to receive and secure webbing 22 in a secured position. It is contemplated that receiving element 30 may include a buckle element which receives and secures a latch element disposed on the webbing of the belt assembly.

As is illustrated in Figure 4, webbing 22 of belt assembly 12 is shown extending at least partially across vehicle seat 14 toward receiving element 30 in an activated or deployed position. The controller 36, as shown in Figure 6, in response to a signal output from one or more of sensors 38, 40, 42, transmits a signal to a pressure source, shown as block 44. Pressure source 44 may be located anywhere on board the vehicle and preferably comprises a pressure vessel that is recharged by an air compressor (not shown). Alternatively, the pressure source may comprise a vehicle component which supplies pneumatic power to other vehicle systems such as an air suspension system (not shown).

In yet another aspect of the present invention, a pressure bladder (not shown) may be disposed within the seat cushion and contain air or another gas. When an occupant sits on seat cushion, the pressure bladder is compressed by the occupant's body weight, and at least a portion of the gas contained in the bladder is forced into inflatable section, causing the belt assembly to move to the deployed condition.

Referring now to Figures 6-8, a description of the interconnection between an inflatable section 50 in webbing 22 of seat belt assembly 12 and the pressure source 44 is described in greater detail. A valve 46 may be provided to control the flow of gas from the pressure source 44 into a hose 48. Controller 36 monitors and controls pressure source 44 and/or valve 46 to control the flow of pressurized gas from the pressure source through hose 48 into the inflatable section 50 of belt assembly 12.

Controller 36 activates pressure source 44 and/or valve 46 so as to force gas through hose 48 and into inflatable section 50 after the occupant is seated in the vehicle seat and ready to don the seat belt. The controller may, for example, inflate the belt assembly in response to a "seat occupied" indication from a seat weight sensor and/or a "door closed" indication from door condition sensor and/or in response to an "on" indication from ignition key. It is also contemplated that the controller will instruct the valve to allow the inflatable section 50 to deflate upon detection of a secondary condition, such as a period of time elapsing without use of the restraint system, or detection of a "door open" indication from the door condition sensor or an "off" indication from the ignition key.

As shown in Figure 8, when inflatable section 50 inflates to present the belt to the occupant, it expands in cross-section so that it is no longer flat and, as a result, it becomes substantially more rigid than when deflated. In the deployed condition shown in Figure 4, the inflatable section in webbing 22 causes belt assembly 12 to extend generally forward and inward with respect to the seat 14 and occupant so that the occupant may grasp webbing 22, pull the belt across his/her body, and secure the webbing 22 to receiving element 30 on the anchor. Movement of the belt to the deployed, graspable condition may require some amount of the webbing 22 to be drawn out of retractor 34, so inflation of inflatable section 50 must provide sufficient force to overcome the winding force of the retractor. Alternatively, the use of an electric motor within the retractor assists in feeding webbing when the inflatable section is inflated to overcome the spring force of the belt retractor and for retracting the webbing in the deflated condition.

In the deployed condition, belt assembly 12 is preferably adjacent or above the upper surface of the occupant's thigh and far enough forward and inward for the occupant to easily see and grasp the webbing 22. The inflatable section remains somewhat flexible and compliant when in the inflated condition so that it does not cause any discomfort to occupant if it contacts the occupant's body as it extends inward to present the belt. If, due to the geometry of the vehicle seat, anchors or other vehicle structure, the inflatable section must assume a complicated shape in order to properly position the belt in the deployed condition. This may be achieved by designing the inflatable section to include a variety of shapes and geometries, which will be described in greater detail below.

Referring now to Figure 5, belt assembly 12 of restraint system 10 is shown in the secured position. It is contemplated that belt assembly 12 may be secured around receiving element 30 with or without the aid of the seat occupant.

In a first aspect of the present invention, when the inflated section in webbing 22 inflates, the belt assembly extends at least partially across the occupant's body towards the receiving element 30. The seat occupant grasps webbing 22 and places the webbing 22 over receiving element 30. Receiving element 30 may comprise an anchor that includes a locking element to secure webbing.
Alternatively, the receiving element may include a fixed tether with one or more protruding sections which are designed to engage and secure the webbing.

In one aspect of the present invention, the sensor positioned adjacent receiving element 30 detects the presence of the webbing 22 and transmits a signal to the controller. Controller, in response to this signal, commands the valve to open, thereby deflating inflatable section. When the inflatable section at least partially deflates, the belt assembly 12 will secure the occupant within the vehicle seat 14. It is also contemplated that the controller will instruct the pressure source and/or valve to deflate the inflatable section in the webbing 22 based on the detection of other conditions, including the belt retractor sensor detecting the occupant grasping the belt assembly, expiration of a set time period, or by any other appropriate condition or combination of conditions of vehicle systems.

In another aspect of the present invention, the belt assembly 12 may inflate and extend around the receiving element 30 during the inflation process. During this process, the inflatable section fills and expands the webbing such that the webbing extends across the occupant in seat 14 such that the webbing inflates over the receiving element adjacent a locking element 52. Once positioned in locking element 52, the controller will transmit a signal to the pressure source and/or valve to at least partially deflate the inflatable section in webbing 22 to secure the occupant in vehicle seat 14.

Referring now to Figures 7-10, a more detailed description of belt assembly 12 of restraint system 10 is provided. The inflatable section 50 of webbing 22 is attached to the lower anchor of the restraint system. The inflatable section 50 in the inflated condition has an expanded circular shape in cross-section and is more rigid than when in the deflated condition and urges the belt assembly to the at least one deployed position in which the belt is unfastened and is positioned so that the seat occupant may easily grasp the belt to permit fastening of the belt, as shown in Figure 4. It is understood that the inflatable section may be positioned anywhere along the length of the belt, including adjacent an upper belt anchor. An inflatable section disposed adjacent an upper anchor will move so that its lower end moves forward and/or inward when it deploys.

In the deflated condition shown in Figure 7, inflatable section 50 and webbing 22 are positioned adjacent one another. In a preferred aspect of the present invention, as shown in Figure 8, inflatable section 50 when inflated has a cross section circumference which is significantly less than that of the surrounding webbing. This difference in width allows inflatable section 50 to freely expand to a generally circular shape in cross-section and to a generally curved shaped longitudinally within the webbing 22 while allowing the webbing 22 to maintain sufficient flexibility to extend from the stowed position to a deployed position.

The inflatable section of the belt assembly can be formed by a variety of materials and manufacturing methods. As shown in Figures 7-8, webbing 22 of belt assembly 12 is formed from a pair of woven strips which are stitched or otherwise secured together to form a recess to receive the inflatable section 50. The inflatable section 50 is formed from a flexible, impermeable material, such as polyvinyl carbonate (PVC) or polyester. Inflatable section is preferably formed as a pair of strips that are sealed or secured to each other with adhesive or the like to allow for expansion of the material and provide a substantially gas-tight inner chamber. When expanded, the inflation section 50 provides webbing 22 a curved shape optimal for securing to a receiving element provided on the opposite side of the vehicle seat.

Referring now to Figures 9 and 10, alternative embodiments of the inflatable section 50 of the present invention are shown and disclosed.

Figure 9 illustrates a inflatable section 50 disposed within a webbing 22 of seat belt assembly 12. Inflatable section 50 includes an inflatable member 54 secured to a structural member 56. Inflatable member 54 is preferably a one-piece elastic tube which forms an inner chamber therein. Structural member 56 may comprise a polymeric chord which can be either laminated or attached to a portion of the inflatable member 54. In one aspect of the present invention, the inflatable member 54 inflates to a generally curved shape such that the structural member 56 is longitudinally shorter than the webbing 2 while maintaining more rigidity than webbing 22. It is also understood that the inflatable member may be shaped based on the amount and application of air pressure entering the inner chamber.

As shown in Figure 10, the inflation chamber of inflatable section 50 need not be one large, tubular section, but instead may be divided into multiple sections. Inflatable section 50 comprises a pair of inflatable tubes 58, 60, each defining an inner chamber therein. Tubes 58, 60 are laminated together to form inflatable section 50 within webbing 22 of seat belt assembly 12. The longitudinal curved shape of inflatable section 50 is preferably controlled by application of different pressures in each tube by the pressure source. Alternatively, tubes 58, 60 may have distinct elastic properties, allowing one tube to expand into the webbing, allowing the belt to deploy, while the remaining tube retains the desired curved shape. It is understood that tubes 58, 60 may be separated from one another, or they may be connected with one another to permit some amount of gas flow between them.

Alternatively, it is also possible to fabricate a belt according to the invention wherein the inflatable section is formed integrally with the webbing. This may be accomplished, by manufacturing the webbing as a flat, two-layer, tubular structure in, for example, a "one-piece woven" technique. This type of construction eliminates the need to stitch a separate top layer to the webbing. The upper end of the inflation chamber is defined by stitching or otherwise sealing off the chamber so that the portion of the belt above the stitching does not inflate.

The webbing should be manufactured to naturally maintain a flat condition. It is also possible to fabricate the inflatable section as a unit that is separate from webbing, and that is subsequently secured to the webbing. This may be achieved, for example, by fabricating a flexible tube (not shown) with closed ends that is sewn or otherwise secured to webbing in the desired location to define inflatable section.

It is also possible for an inflatable section according to the present invention to be maintained in a state of partial inflation at times when it is desired that the belt be in the stowed condition. Inflatable section will be configured such that the partially inflated state gives belt a shape and a degree of rigidity that serves (along with the belt tension provided by belt retractors) to help retain the belt in the desired stowed condition in which it will not interfere with occupants entering and exiting the vehicle. The state of partial inflation may constitute inflation of the same inflation chamber or group of chambers that are used to achieve deployment, but at a reduced pressure. Or the state of partial inflation may constitute inflation of an inflation chamber or a group of chambers separate from those used to achieve deployment. In either case, the controller is programmed to supply pressure to inflatable section in a manner to achieve the partially inflated state at desired times based on inputs from appropriate vehicle systems.

It will be appreciated by those skilled in the art that although the invention has been described by way of example with reference to one or more embodiments it is not limited to the disclosed embodiments and that one or more modifications to the disclosed embodiments or alternative embodiments could be constructed without departing from the scope of the invention.

## Claims

1. A restraint system (10) for use in a passenger seating area of a motor vehicle, the restraint system (10) comprising a seat belt assembly (12) disposed adjacent a passenger seat (14) adjustable between a stowed position and at least one deployed position, the seat belt assembly (12) including
a webbing (22) positionable across the body of an occupant (18),
an inflatable section (50) disposed within the webbing (22) having a deflated condition and an inflated condition wherein the belt assembly (12) is urged to the at least one deployed position,
an anchor (32) disposed opposite the seat belt assembly (12) adjacent the seat (14) having a receiving element (80) adapted to engage and secure the belt assembly (12), and
a controller (36) operative to monitor vehicle conditions, the inflatable section (50) being inflated to position the belt assembly (12) in the at least one deployed position for securing around the occupant (18) when the controller (36) detects that the seat (14) is occupied,
**characterised in that** the controller is operative to deflate the inflatable section (12) in response to a belt retractor sensor (38) detecting the occupant grasping the belt assembly .

2. A system as claimed in claim 1 wherein the webbing (22) of the seat belt assembly (12) extends between a lower anchor (28) mounted adjacent a lower side portion of the seat (14) and an upper anchor (24) including a belt retractor (34) disposed adjacent an upper portion of the seat (14).

3. A system as claimed in claim 1 or in claim 2 in which, the inflatable section (50) has, in the deflated condition, a generally flat cross-section and has, in the inflated condition, an expanded cross-section so that it is more rigid than when it is in the deflated condition, the arrangement being such that, when the inflatable section (50) is inflated, the inflatable section (50) urges the unfastened belt (12) to at least one deployed position in which the belt (12) is positioned so that an occupant (18) of the seat (14) may easily grasp the belt (12) to permit fastening of the belt (12).

4. A system as claimed in claim 3 wherein the inflatable section (50) in the inflated condition has a cross-section that is smaller than that of the surrounding webbing (22) and is at least partially curved in shape as it extends generally longitudinally through the webbing (22).

5. A system as claimed in any of claims 1 to 4 wherein, when in the inflated condition, the inflatable section (50) urges the belt (12) generally inward and forward with respect to the seat (14).

6. A system as claimed in any of claims 1 to 5 further comprising a source of gas pressure (44) connected to the inflatable section (50) arranged to alternatively inflate and deflate the inflatable section (50).

7. A system as claimed in any of claims 1 to 6 further comprising one or more sensors (38, 40, 42) in communication with the controller (36) operative to monitor one or more vehicle conditions.

8. A system as claimed in claim 7 wherein the one or more sensors includes at least one sensor (38) disposed adjacent the belt retractor (34) to monitor movement of the belt retractor (34), at least one sensor (42) disposed adjacent a seat bottom of the vehicle seat to detect the presence of the occupant in the vehicle seat and at least one sensor (40) provided adjacent the receiving element (30) for sensing if the webbing (22) is disposed adjacent the receiving element (30).

9. A method of presenting a restraint system associated with a passenger seating area of a motor vehicle to an occupant, the method comprising the steps of
providing a seat belt assembly (12) disposed adjacent a passenger seat (14) including a webbing (22) positionable across the body of an occupant (18) extending between a lower anchor (28) mounted adjacent a lower side portion of the seat (14) and a belt retractor (34) disposed adjacent an upper side portion of the seat (14),
providing an inflatable section (50) disposed within the webbing (50) adjustable between a deflated condition and an inflated condition wherein the belt assembly (12) is urged to the at least one deployed position,
connecting a source of gas pressure (44) to the inflatable section (50), the source of gas pressure (44) operable to selectively inflate and deflate the inflatable section (50),
providing an anchor (32) disposed opposite the seat belt assembly (12) adjacent the seat (14) having a receiving element (30) adapted to engage and secure the belt assembly (12),
transmitting a signal from a controller (36) to the source of gas pressure (44) to inflate the inflatable section (50) upon detection of an indication from at least one vehicle system,
**characterised by** the step of
transmitting a signal from a controller to the source of gas pressure (44) to deflate the inflatable section (50) in response to a an indication from a belt retractor sensor (38) detecting the occupant grasping the belt assembly.

## Patentansprüche

1. Rückhaltesystem (10) für den Einsatz in einem Insassensitzbereich eines Kraftfahrzeuges, welches Rückhaltesystem (10) eine Sicherheitsgurteinheit (12) beinhaltet, welche in unmittelbarer Nähe eines Insassensitzes (14) angebracht ist und zwischen einer Verstauposition und wenigstens einer ausgefahrenen Position verstellbar ist, wobei die Sicherheitsgurteinheit (12) folgendes aufweist:
ein Gurtband (22), welches um den Körper eines Insassen (18) gelegt werden kann,
einen innerhalb des Gurtbandes (22) angeordneten aufblasbaren Bereich (50) mit einem drucklosen Zustand und einem aufgeblähten Zustand, in dem die Sicherheitsgurteinheit (12) in die wenigstens eine ausgefahrene Stellung gedrängt wird,
einen der Sicherheitsgurteinheit (12) gegenüberliegend in unmittelbarer Nähe des Sitzes (14) angeordneten Anker (32) mit einem Aufnahmeelement (30), welches ausgelegt ist, mit der Sicherheitsgurteinheit (12) in Eingriff zu treten und diese zu sichern, und
eine Steuerung (36), welche ausgelegt ist, Fahrzeugbedingungen zu überwachen, wobei der aufblasbare Teil (50) so aufgebläht wird, daß die Sicherheitsgurteinheit (12) in der wenigstens einen aufgeblähten Stellung zur Sicherung um den Insassen (18) herum positioniert wird, wenn die Steuerung (36) erkennt, daß der Sitz (14) besetzt ist,
**dadurch gekennzeichnet, daß**
die Steuerung derart wirksam ist, daß der aufblasbare Teil (50) in Reaktion darauf entleert wird, daß ein Gurtaufrollersensor (38) erkennt, daß der Insasse die Gurteinheit ergreift.

2. System nach Anspruch 1, worin sich das Gurtband (22) der Sicherheitsgurteinheit (12) zwischen einem in unmittelbarer Nähe eines unteren Seitenbereiches des Sitzes (14) angebrachten unteren Anker (28) und einem in unmittelbarer Nähe eines oberen Bereiches des Sitzes (14) angebrachten oberen Anker (24) mit einem Gurtaufroller (34) erstreckt.

3. System nach Anspruch 1 oder Anspruch 2, worin der aufblasbare Bereich (50) im drucklosen Zustand einen allgemein flachen Querschnitt aufweist und im aufgeblähten Zustand einen erweiterten Querschnitt, so daß er dann steifer ist, als wenn er sich im drucklosen Zustand befindet, wobei die Anordnung derart ist, daß, wenn der aufblasbare Bereich (50) aufgebläht ist, der aufblasbare Bereich (50) den unbefestigten Gurt (12) in wenigstens eine ausgefahrene Stellung drängt, in welcher der Gurt (12) so positioniert ist, daß ein Insasse (18) auf dem Sitz (14) den Gurt (12) leicht ergreifen kann, so daß der Gurt (12) befestigt werden kann.

4. System nach Anspruch 3, worin der aufblasbare Bereich (50) im aufgeblähten Zustand einen Querschnitt aufweist, der kleiner als derjenige des umgebenden Gurtbandes (22) ist, und wenigstens teilweise im Bogen vorgeformt ist, wenn er sich allgemein längs durch das Gurtband (22) erstreckt.

5. System nach einem beliebigen der Ansprüche 1 bis 4, worin der aufblasbare Bereich (50) im aufgeblähten Zustand den Gurt (12) in bezug auf den Sitz (14) allgemein nach innen und nach vorne drängt.

6. System nach einem beliebigen der Ansprüche 1 bis 5, des weiteren eine Gasdruckquelle (44) aufweisend, welche mit dem aufblasbaren Bereich (50) verbunden und so ausgelegt ist, den aufblasbaren Bereich (50) abwechselnd zu entleeren und aufzublähen.

7. System nach einem beliebigen der Ansprüche 1 bis 6, des weiteren einen oder mehrere in Verbindung mit der Steuerung (36) stehende Geber (38, 40, 42) aufweisend, welche derart wirken, daß sie eine oder mehrere Fahrzeugbedingungen überwachen.

8. System nach Anspruch 7, worin die ein oder mehreren Sensoren wenigstens einen in unmittelbarer Nähe des Gurtaufrollers (34) angebrachten Sensor (38) zur Überwachung der Bewegungen des Gurtaufrollers (34) beinhalten, wenigstens einen in unmittelbarer Nähe eines Sitzbodens des Fahrzeugsitzes angebrachten Sensor (42) zur Erfassung der Gegenwart eines Insassen auf dem Fahrzeugsitz und wenigstens einen in unmittelbarer Nähe des Aufnahmeelementes (30) angebrachten Sensor (40) zur Erfassung, ob das Gurtband (23) an dem Aufnahmeelement (30) anliegt.

9. Verfahren, einem Insassen ein einem Insassensitzbereich in einem Kraftfahrzeug zugeordnetes Rückhaltesystem zu präsentieren, welches Verfahren folgende Schritte beinhaltet:
Bereitstellen einer in unmittelbarer Nähe eines Insassensitzes (14) angeordneten Sicherheitsgurteinheit (12) mit einem Gurtband (22), welches um den Körper eines Insassen (18) herumlegbar ist und sich zwischen einem in unmittelbarer Nähe eines unteren Seitenbereiches des Sitzes (14) angebrachten unteren Anker (28) und einem in unmittelbarer Nähe eines oberen Seitenbereiches des Sitzes (14) angebrachten Gurtaufroller (34) erstreckt,
Bereitstellen eines innerhalb des Gurtbandes (22) angebrachten aufblasbaren Bereiches (50), welcher zwischen einem drucklosen Zustand und einem aufgeblähten Zustand verstellbar ist, in welchem die Sicherheitsgurteinheit (12) in die wenigstens eine ausgefahrene Stellung gedrängt wird,
Anschließen einer Gasdruckquelle (44) an dem aufblasbaren Bereich (50), wobei die Gasdruckquelle so betreibbar ist, daß sie den aufblasbaren Bereich (50) selektiv aufbläht und entleert,
Bereitstellen eines der Sicherheitsgurteinheit (12) gegenüberliegend in unmittelbarer Nähe des Sitzes (14) angebrachten Ankers (32) mit einem Aufnahmeelement (30), welches ausgelegt ist, mit der Sicherheitsgurteinheit (12) in Eingriff zu treten und diese zu sichern,
Übertragen eines Signals von einer Steuerung (36) an die Gasdruckquelle (44) zum Aufblähen des aufblasbaren Bereiches (50) bei Erfassung einer Anzeige von wenigstens einem Fahrzeugsystem,
**gekennzeichnet durch** den Schritt der
Übertragung eines Signals von einer Steuerung zur Gasdruckquelle (44), um den aufblasbaren Bereich (50) in Reaktion auf eine Anzeige von einem Gurtaufrollersensor (38) zu entleeren, wenn dieser erfaßt, daß der Insasse die Gurteinheit ergriffen hat.

## Revendications

1. Système de retenue (10) à utiliser dans une zone de siège de passager d'un véhicule à moteur, le système de retenue (10) comprenant un ensemble de ceinture de sécurité (12) disposé au voisinage d'un siège de passager (14) et pouvant être réglé entre une position de rangement et au moins une position déployée, l'ensemble de ceinture de sécurité (12) comprenant :
une sangle (22) pouvant être positionnée en travers du corps d'un occupant (18),
une partie gonflable (50) disposée à l'intérieur de la sangle (22) et possédant un état dégonflé et un état gonflé, de sorte que l'ensemble de ceinture de sécurité (12) est poussé vers la position déployée au moins unique,
un ancrage (32), disposé à l'opposé de l'ensemble de ceinture de sécurité (12) au voisinage du siège (14) et possédant un élément récepteur (30) conçu pour engager et
fixer l'ensemble de ceinture (12), et
un contrôleur (36) opérationnel pour surveiller des états du véhicule, la partie gonflable (50) étant gonflée afin de positionner l'ensemble de ceinture (12) dans la position déployée au moins unique, afin d'être fixée autour de l'occupant (18), lorsque le contrôleur (36) détecte que le siège (14) est occupé,
**caractérisé en ce que** le contrôleur est opérationnel pour dégonfler la partie gonflable (50) en réponse à un capteur (38) de rétracteur de ceinture détectant que l'occupant saisit l'ensemble de ceinture.

2. Système selon la revendication 1, **caractérisé en ce que** la sangle (22) de l'ensemble de ceinture de sécurité (12) s'étend entre un ancrage inférieur (28), monté au voisinage d'une partie latérale inférieure du siège (14), et un ancrage supérieur (24) comprenant un rétracteur de ceinture (34), disposé au voisinage d'une partie supérieure du siège (14).

3. Système selon la revendication 1 ou 2, **caractérisé en ce que** la partie gonflable (50) possède, dans l'état dégonflé, une section globalement plate et possède, dans l'état gonflé, une section déployée, de sorte qu'elle est plus rigide que lorsqu'elle est dans l'état dégonflé, l'agencement étant tel que, lorsque la partie gonflable (50) est gonflée, la partie gonflable (50) pousse la ceinture non fixée (12) vers au moins une position déployée dans laquelle la ceinture (12) est positionnée de telle sorte qu'un occupant (18) du siège (14) peut aisément saisir la ceinture (12) afin de pouvoir fixer la ceinture (12).

4. Système selon la revendication 3, **caractérisé en ce que** la partie gonflable (50) possède, dans l'état gonflé, une section qui est plus petite que celle de la sangle entourante (22), et qui est d'une forme au moins partiellement incurvée tandis qu'elle s'étend globalement longitudinalement à travers la sangle (22).

5. Système selon l'une des revendications 1 à 4, **caractérisé en ce que,** lorsqu'elle est dans l'état gonflé, la partie gonflable (50) pousse la ceinture (12) globalement vers l'intérieur et vers l'avant par rapport au siège (14).

6. Système selon l'une des revendications 1 à 5, **caractérisé en ce qu'**il comprend en outre une source de pression de gaz (44) reliée à la partie gonflable (50) et conçue pour alternativement gonfler et dégonfler la partie gonflable (50).

7. Système selon l'une des revendications 1 à 6, **caractérisé en ce qu'**il comprend en outre un ou plusieurs capteurs (38, 40, 42) en communication avec le contrôleur (36) opérationnel pour surveiller un ou plusieurs états du véhicule.

8. Système selon la revendication 7, **caractérisé en ce que** le ou les capteurs comprennent au moins un capteur (38) disposé au voisinage du rétracteur de ceinture (34) pour contrôler le mouvement du rétracteur de ceinture (34), au moins un capteur (42) disposé au voisinage d'un fond de siège du siège de véhicule pour détecter la présence de l'occupant dans le siège de véhicule, et au moins un capteur (40) prévu au voisinage de l'élément récepteur (30) pour détecter si la sangle (22) est disposée au voisinage de l'élément récepteur (30).

9. Procédé pour présenter à un occupant un système de retenue associé à une zone de siège de passager d'un véhicule à moteur, le procédé comprenant les étapes consistant à :
fournir un ensemble de ceinture de sécurité (12), disposé au voisinage d'un siège de passager (14) et comprenant une sangle (22) pouvant être positionnée en travers du corps d'un occupant (18) et s'étendant entre un ancrage inférieur (28), monté au voisinage d'une partie latérale inférieure du siège (14), et un rétracteur de ceinture (34) disposé au voisinage d'une partie latérale supérieure du siège (14), fournir une partie gonflable (50), disposée à l'intérieur de la sangle (22) et réglable entre un état dégonflé et un état gonflé, de sorte que l'ensemble de ceinture (12) est poussé vers la position déployée au moins unique, relier une source de pression de gaz (44) à la partie gonflable (50), la source de pression de gaz (44) étant actionnable pour sélectivement gonfler et dégonfler la partie gonflable (50),
fournir un ancrage (32), disposé à l'opposé de l'ensemble de ceinture de sécurité (12) au voisinage du siège (14) et possédant un élément récepteur (30) conçu pour engager et fixer l'ensemble de ceinture (12), transmettre un signal d'un contrôleur (36) à la source de pression de gaz (44) pour gonfler la partie gonflable (50) en cas de détection d'une indication provenant d'au moins un système du véhicule,
**caractérisé par** l'étape consistant à transmettre un signal d'un contrôleur à la source de pression de gaz (44) pour dégonfler la partie gonflable (50) en réponse à une indication provenant d'un capteur (38) de rétracteur de ceinture détectant que l'occupant saisit l'ensemble de ceinture.
